# EUROPEAN PATENT SPECIFICATION

(11) **EP 1 063 449 B1**
(45) Date of publication and mention of the grant of the patent: **15.09.2004**
(21) Application number: 99810551.4
(22) Date of filing: 22.06.1999
(51) Int. Cl.: F16G 13/18, B05C 19/00

(54) **Flock chain**
Beflockte Kette
Chaîne floquée

(43) Date of publication of application: 27.12.2000
(73) Proprietor: Centrafid S.A., 6830 Chiasso (CH)
(72) Inventor:
(74) Representative: BOVARD AG - Patentanwälte

(56) References cited:
- DE-A- 1 810 563
- DE-B- 1 203 168
- FR-A- 1 096 934
- FR-A- 1 518 548
- FR-A- 2 524 435
- US-A- 3 375 124

## Description

The present invention relates to a chain.

More particularly, the present invention relates to a chain in which the surface of the constituent rings is covered in so-called "flock", or short fibres which are applied to the surface to produce a "velvet" effect.

As is already known, there are two principal categories of chain: one type, which has special links, is designed as a means of transmission (for example, the chains on cycles and motor cycles, the drive chains in internal combustion engines and so on) and another type, which simply comprises a series of rings which are attached to one another and which is commonly used to exert a traction force on a load (for example, chains for lifting loads, chains for anchoring floating objects ...) or to tie something up or hold it fast (for example, anti-theft security chains, chains for restraining animals ...).

In the following description we shall refer solely to this second type of chain, which will be the subject of the present invention.

A chain, therefore, is made up of a series of rings which are closed around one another and which can have a variety of shapes and sizes, and which are generally made of metallic materials such as, for example, iron, steel, brass and so on.

Depending on the shape of the said rings, the chains can be known as any of the following: "Genoan", normal, calibrated, long link, short link, round link, square link, cathedral arch link, blanked flat link, cable chain, hammered cable chain, curb link and so on.

Although these chains are in current use and widely purchased for a variety of uses, they do present several disadvantages.

First of all, both in terms of the use to which they are put and in terms of the environment in which they are often required to be used, the chains are subject to corrosion. For this reason, it is rare for the chains to be made exclusively of iron; they are more usually made of special anti-corrosive steels. Alternatively, they can be treated in such a way as to be covered with a layer of protective material, for example noble metal, zinc, nickel, chromium and other materials.

For one reason and another, these surface coatings are not suitable for all applications and often have inherent and considerable additional costs. Moreover, they do not compensate for other disadvantages which will be explained in more detail below.

A second disadvantage becomes obvious when they are used for long periods of time under dynamic conditions; this is because the interaction between the chain and another mechanical component (for example, a capstan, a mooring bollard, a slot ...) produces a relative movement which, most of the time, is a sliding movement, so that the contact surfaces undergo abrasion and scratching which lead to damage. This effect is unavoidable because of the high coefficient of friction which is at work, unless special measures are adopted, such as the use of lubrication systems or articulated components which are made using self-lubricating materials (such as nylon ®, Teflon ® and others).

A further disadvantage is noise, which results from the colliding and sliding movements which occur between the surfaces (especially metal ones) when the rings come into contact with one another and with other surfaces.

A final annoying disadvantage, and one which is particularly related to the metallic nature of the chain, is the "cold" effect, namely that it feels cold to the user's touch when he/she is handling the chain, especially in a particularly "rigid" climate. Vice versa, long exposure to the sun or other sources of heat can sometimes render the chain so hot that it is impossible to handle until it has cooled down again.

With a view to overcoming these disadvantages, it has been proposed that the chain be covered in a protective elastic sleeve for some applications (the example here would be anti-theft chains with a padlock). To that end, sleeves made from a heat-shrinkable plastic material have been used to cover the whole of the chain.

However, whilst this solution does deal with some of the disadvantages (such as the unpleasantness of touch, noise and abrasive damage), it does not solve them all and even introduces new ones, one of which relates to the rigidity of the resulting chain. In fact, the elastic sleeve, in covering the whole of the chain, significantly reduces its flexibility and the handling qualities of a loose-linked connection. As a consequence, the obstacle it can represent when it is folded up can be so great that it can require the use of special containers to put it back in place. In addition, the sleeve which is made of a plastic material deteriorates over time, especially if it is exposed continuously to UV rays, and will produce cracks and breaks. Finally, it is possible that the corrosion problems will increase because the chain is not sufficiently well ventilated and the humidity which then remains trapped inside the sleeve will speed up the corrosive action with obvious effect.

In addition, the use, as a protective measure, of special finishes or other plastic materials which can be applied in thin layers to the surface of the individual rings is well known (DE-B-1810563). However, these solutions are not at all satisfactory in terms of duration or overall performance. In fact, although the layers of protective material may be fairly thin, they are by no means negligible and thus tend to have a negative effect on the chain's characteristics of flexibility, and in certain cases have even been the cause of the rings "sticking" to one another or "gripping".

The aim of the present invention is to solve the problems which are described above.

More particularly, the aim of the present invention is to provide a chain which is both pleasant to the touch, durable in the presence of oxidising agents, easy to handle and flexible, is resistant when exposed to UV rays, has a surface with a low coefficient of friction, such as not to damage the surfaces with which it comes into contact, and which is not noisy.

These and other aims, which will be explained in the description which follows, have been achieved using a chain as described in the attached claims.

Characteristics and advantages of the present invention will also become obvious from the detailed description which follows and which is provided by way of reference to the attached drawings, in which:
Figure 1 is a lateral view of a section of the chain according to the invention;
Figure 2 is a transverse view taken along the line II-II of Figure 1; and
Figure 3 is a schematic view taken in section of a sample flocking station.

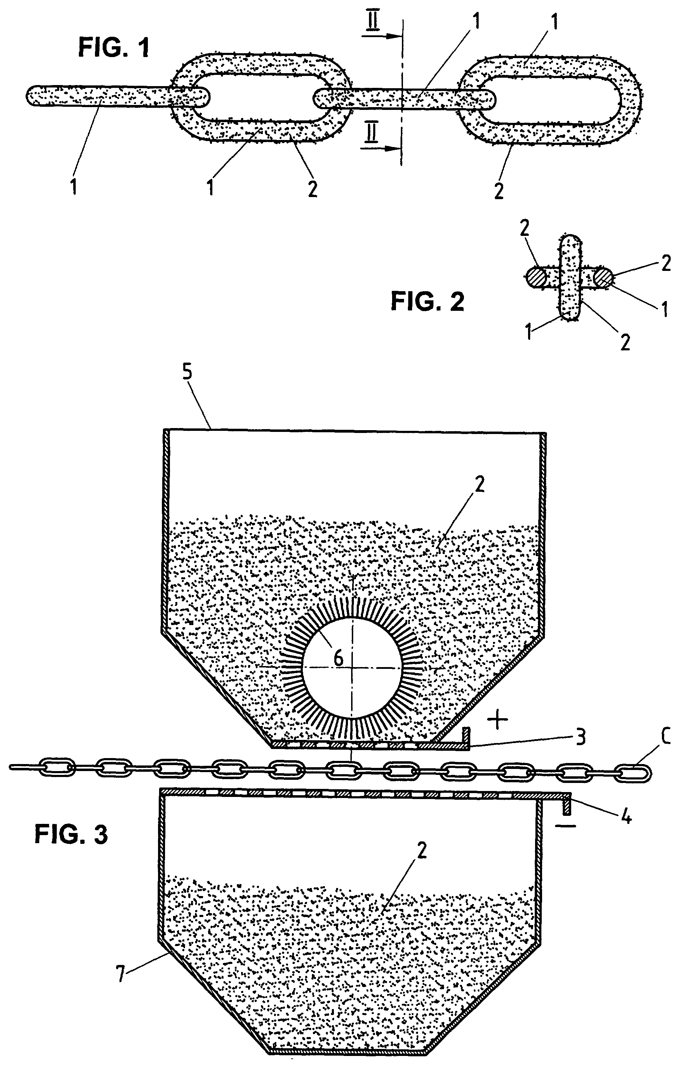

As has already been stated, a generic chain C comprises a series of rings 1, for example circular in section, which are linked to one another continuously, such as can be seen in Figure 1, which shows only four.

According to the invention, the surface of the rings 1 is coated with "flock" or short fibres 2.

The fibres 2 may be made either from synthetic material or natural material. The natural fibres to be preferred, but not in any limiting manner, include viscose fibres. By contrast, from among the synthetic fibres, we can mention acrylic fibres, polyester fibres, polyamide fibres (Nylon ®) polyolefins, Rayon ®, viscose, acetate and so on.

The fibres may be plain or coloured to any colour.

The fibre count will preferably be less than 3.5 (three point five) dtex, and even more preferably in the range between 0.5 (zero point five) and 3.3 (three point three) dtex. The length may vary between 0.1 (zero point one) and 5 mm (five millimetres), and preferably be between 0.2 (zero point two) and 1.5 mm (one point five millimetres).

In order to obtain the best result, the density of the fibres on the surface of the rings should correspond to a deposit of 80 g/m² (eighty grams per square metre). The flock or fibres 2 are preferably applied in a direction perpendicular to the surface of the rings, and are fixed thereto by means of the technique of electrostatic flocking.

The technique generally known as "flocking" is well known in the literature, and is used industrially to coat the most varied of large surfaces, such as textiles, paper, cardboard boxes, wood or metal sheets, wallpapers and so on.

This consists in fixing short fibres to a surface by means of a substrate of adhesive which has been applied in advance, in order to give that same surface a soft or velvet-like effect.

The chain according to the invention undergoes the following treatments on a flocking line.

In a first station, the untreated chain or a chain with a traditional protective treatment is spread with adhesive. The adhesives which can be used are well known and are available commercially; by way of example, mention may be made of those known bearing the name of RAS 10-2-71-A, made by RAS S.a.s.

The layer of adhesive may be applied to the surface of the rings by immersing the chain into a bath containing the adhesive in its liquid state or by passing the chain through a cabin which is fitted with adhesive spray nozzles which are directed and arranged in such a way as to cover the entire surface of the rings or alternatively by means of a brush arrangement, where the chain is passed between two series of opposing applicators which have been soaked in adhesive. The excess adhesive can then be removed if necessary.

In a second station, the fibres which have previously been cut to the required length by means of any of the known methods such as, for example, by cutting, by tearing or by chopping, can then be deposited on the chain.

A preferred method provided for is when the chain C is made to pass through a very high potential electrical field of the order of 50,000 V (fifty thousand volts) in which the fibres are transported. These then, when they encounter the chain itself, are attracted in and attach to the substrate of adhesive.

By way of example, Figure 3 shows a machine which is designed to effect the deposition of the "flock". The chain C is made to pass between two plates with holes 3 and 4, one of which has a positive charge and the other a negative charge and where there is a high difference in potential. Above the upper plate 3 there is a loader 5 which contains a large quantity of fibres 2. A group of brushes pushes the fibres against the upper plate 3. The fibres 2 are thus given an electrostatic charge, and pass through the holes in the upper plate 3 and, transported by the force of the electrical field, are attracted by the lower plate 4. Whilst they are passing through the area where the chain C is lying, in a position which is substantially parallel to the lines of the electrical field, the fibres 2 are deposited in a direction which is substantially perpendicular to the surface of the rings 1.

The fibres 2 which are not intercepted by the chain, or which do not stay attached to it, adhere to the lower plate 4 and, via appropriate apertures, then fall internally into a collection hopper 7, from where they are subsequently recovered.

During this phase of the treatment, the chain can be manoeuvred as required - for example it can be turned on its axis or it can be slackened off or tightened up repeatedly - in order to ensure that the flock 2 is deposited in the best manner possible onto the surface.

A drying operation in a kiln is carried out in the last station, under a controlled temperature which is generally not less than 100° C (one hundred degrees Celsius), and preferably in the range between 120 (one hundred and twenty) and 170° C (one hundred and seventy degrees Celsius), to dry out the adhesive.

If necessary, this can be followed by a brushing phase to remove the fibres which have not adhered to the chain.

The "flocked" chain according to the invention meets in full the aims expressed in the preamble. In fact, the substrate of adhesive and the subsequent application of fibres constitute an excellent surface coating from various points of view. First of all, it provides excellent protection for the metal surface against attack by oxidising agents; the double protective layer of first the adhesive and then the short fibres provides an excellent barrier against any corrosive attack; it should be emphasised, *inter alia,* that the short fibres constitute, *inter alia,* a means of protecting the underlying substrate of adhesive, which is thus further preserved and will last for a considerable length of time. The velvet-like layer of "flock", furthermore, is very thin and thus flexible and does not hinder the relative mobility of the rings, and therefore means that the flexibility of the chain is unaffected. Thanks to its softness, the "flock" coating completely muffles the sound of the rings as they come into contact with each other and other surfaces, thus strongly reducing the noise of the chain. In addition, the velvet-like surface and the chain's resulting low coefficient of friction mean that the incisive and abrasive effect is eliminated on those surfaces where a relative sliding movement had been noted, as well as the risks of gripping and sticking; indeed, by the appropriate use of the material of which the "flock" is composed, it is possible to achieve self-lubricating properties for the coating which make the chain even more smooth-running over many surfaces.

The process for treating a chain comprising a plurality of rings is characterised in that it consists in fixing short fibres to at least a surface of each ring by means of an adhesive which has been applied in advance.

According to this treatment process :
- in a first step, the rings of the chain are at least partially spread with an adhesive,
- in a second step, the adhesive-spread part of the chain lies at least partially in an electrical field, in a position which is substantially parallel to the lines of the electrical field,
- in a third step, the fibres are deposited on the chain, at least in the portion which is lying in the electrical field,
- in a fourth step, the covered parts of the chain are dried to retain the fibres.

According to the process, during the second step, the fibres are deposited in a direction which is substantially perpendicular to the surface of the rings.

According to the process, during at least one step of the treatment, the chain is tightened.

According to the process, during at least one step of the treatment, the chain is alternatively tightened and slackened.

According to the process, during at least one step of the treatment, the chain is turned on its longitunal axis.

The machine comprises :
- two parallel perforated plates 3, 4, a first of which having a positive electrostatic charge and a second of which having a negative electrostatic charge in order to generate a high potential difference,
- a means to position and translate the chain between the two plates,
- a means to distribute fibres through one of the plates, in the area where the chain is lying.

Preferably the machine comprises :
- an upper perforated plate 3 and a lower perforated plate 4,
- a loader 5 which is situated above the upper perforated plate 3, this loader containing a large quantity of fibres and at least a means to push the fibres through the holes of the said first perforated plate,
- a collection hopper 7 which is situated under the lower perforated plate 4, in order to collect the fibres which are not intercepted by the chain.

Although the present invention has been described above with reference to its preferred embodiment, various modifications may be made to it in the light of the information expressed above, without it then falling outside the scope of protection claimed in the attached claims.

For example, the coating of fibres may be provided over the whole surface of each ring or only in certain areas; yet again, the characteristics of density and length of the fibres on the individual ring may be selected differently, depending on the area of application, thus modifying the method of flocking.

## Claims

1. Chain comprising a plurality of rings, **characterised in that** the surface of the rings is at least partially coated with short fibres, by means of an adhesive which has been applied in advance.

2. A chain as claimed in claim 1, **characterised in that** said short fibres are arranged in a substantially perpendicular manner on the surface of the said rings.

3. A chain as claimed in claims 1 or 2, **characterised in that** said short fibres are between 0.1 (zero point one) and 5 mm (five millimetres) in length

4. A chain as claimed in claims 1 or 2, **characterised in that** said short fibres are between 0.2 (zero point two) and 1.5 mm (one point five millimetres) in length.

5. A chain as claimed in any of the preceding claims, **characterised in that** said fibres have a count of less than 3.5 (three point five) dtex.

6. A chain as claimed in claims 1 to 5, **characterised in that** said fibres have a count between 0.5 (zero point five) and 3.3 (three point three) dtex.

7. A chain as claimed in any one of the preceding claims, **characterised in that** said fibres are applied in a density corresponding to a weight of = 80 g/m² (eighty grams per square metre).

8. A chain as claimed in any one of the preceding claims, **characterised in that** said fibres are natural.

9. A chain as claimed in any one of the preceding claims, **characterised in that** said fibres are synthetic.

10. A chain as claimed in any one of the preceding claims, **characterised in that** said rings are coated with a substrate of adhesive, to which said fibres are fixed.

11. A chain as claimed in any one of the preceding claims, **characterised in that** said fibres are applied to the surface of the rings by means of an electrostatic flocking method.

## Patentansprüche

1. Kette mit einer Mehrzahl von Ringgliedern, **dadurch gekennzeichnet, dass** die Oberfläche der Ringglieder mindestens zum Teil mittels eines Klebstoffes, der zuvor aufgebracht wurde, mit kurzen Fasern beschichtet ist.

2. Kette nach Anspruch 1, **dadurch gekennzeichnet, dass** die genannten kurzen Fasern auf der Oberfläche der genannten Ringglieder praktisch senkrecht stehend angeordnet sind.

3. Kette nach Anspruch 1 oder 2, **dadurch gekennzeichnet, dass** die genannten kurzen Fasern eine Länge zwischen 0,1 (Null Komma eins) und 5 mm (fünf Millimeter) haben.

4. Kette nach Anspruch 1 oder 2, **dadurch gekennzeichnet, dass** die genannten kurzen Fasern eine Länge zwischen 0,2 (Null Komma zwei) und 1,5 mm (eins Komma fünf Millimeter) haben.

5. Kette nach einem der vorstehenden Ansprüche, **dadurch gekennzeichnet, dass** die genannten Fasern einen Titer von weniger als 3,5 (drei Komma fünf) dtex aufweisen.

6. Kette nach den Ansprüchen 1 bis 5, **dadurch gekennzeichnet, dass** die genannten Fasern einen Titer zwischen 0,5 (Null Komma fünf) und 3,3 (drei Komme drei) dtex aufweisen.

7. Kette nach einem der vorstehenden Ansprüche, **dadurch gekennzeichnet, dass** die genannten Fasern mit einer Dichte aufgebracht sind, welche einem Gewicht von 80 g/m² (achtzig Gramm pro Quadratmeter) entsprechen.

8. Kette nach einem der vorstehenden Ansprüche, **dadurch gekennzeichnet, dass** die genannten Fasern Naturfasern sind.

9. Kette nach einem der vorstehenden Ansprüche, **dadurch gekennzeichnet, dass** die genannten Fasern Synthesefasern sind.

10. Kette nach einem der vorstehenden Ansprüche, **dadurch gekennzeichnet, dass** die genannten Ringglieder mit einem klebenden Substrat beschichtet sind, auf welchem die genannten Fasern befestigt sind.

11. Kette nach einem der vorstehenden Ansprüche, **dadurch gekennzeichnet, dass** die genannten Fasern auf die Oberfläche der Ringglieder mittels eines elektrostatischen Beflockungsverfahrens aufgebracht wurden.

## Revendications

1. Chaîne comprenant une pluralité d'anneaux, **caractérisée en ce que** la surface des anneaux est au moins partiellement recouverte avec des fibres courtes, au moyen d'un adhésif qui a été par avant appliqué.

2. Chaîne selon la revendication 1, **caractérisée en ce que** les dites fibres courtes sont arrangées d'une manière substantiellement perpendiculaire à la surface desdits anneaux.

3. Chaîne selon la revendication 1 ou 2, **caractérisée en ce que** les dites fibres courtes ont une longueur comprise entre 0,1 (zéro virgule un) et 5 mm (cinq millimètres).

4. Chaîne selon la revendication 1 ou 2, **caractérisée en ce que** les dites fibres courtes ont une longueur comprise entre 0,2 (zéro virgule deux) et 1,5 mm (un virgule cinq millimètres).

5. Chaîne selon l'une quelconque des revendications précédentes, **caractérisée en ce que** les dites fibres ont une valeur de moins de 3,5 (trois virgule cinq) dtex.

6. Chaîne selon l'une des revendications 1 à 5, **caractérisée en ce que** les dites fibres ont une valeur comprise entre 0,5 (zéro virgule cinq) et 3,3 (trois virgule trois) dtex.

7. Chaîne selon l'une quelconque des revendications précédentes, **caractérisée en ce que** les dites fibres sont appliquées avec une densité correspondant à une masse de 80 g/m² (quatre vingt grammes par mètre carré).

8. Chaîne selon l'une quelconque des revendications précédentes, **caractérisée en ce que** les dites fibres sont naturelles.

9. Chaîne selon l'une quelconque des revendications précédentes, **caractérisée en ce que** les dites fibres sont synthétiques.

10. Chaîne selon l'une quelconque des revendications précédentes, **caractérisée en ce que** les anneaux sont recouverts d'une couche d'adhésif à laquelle les dites fibres sont fixées.

11. Chaîne selon l'une quelconque des revendications précédentes, **caractérisée en ce que** les dites fibres sont appliquées sur la surfaces des anneaux par un procédé de flocage électrostatique.
